# EUROPEAN PATENT APPLICATION

(11) **EP 3 010 216 A1**
(43) Date of publication of application: **20.04.2016**
(21) Application number: 14461577.0
(22) Date of filing: 19.10.2014
(51) Int. Cl.: H04N 1/00, G06F 1/16

(54) **Digital photo frame**

(71) Applicant: Zoom.Me Sp. z o.o., 80-309 Gdansk (PL)
(72) Inventor: Kusznierewicz, Mateusz, 04-633 Warszawa (PL); Panek, Roman Krysztof, 60-453 Poznan (PL); Trzebuniak, Krzysztof, 60-687 Poznan (PL); Strzelewicz, Patryk, 61-153 Poznan (PL); Michalski, Daniel, 60-286 Poznan (PL); Bak, Michal, 62-095 Murowana Goslina (PL); Baranowski, Rafal, 82-300 Elblag (PL); Bonikowski, Michal, 64-830 Margonin (PL)
(74) Representative: Sielewiesiuk, Jakub

(57) **Abstract**

The invention is related to a set comprising a device (1) for displaying digital photos and a power supply (2) for supplying electricity to the device, wherein the device (1) with a substantially rectangular shape has a display (4) in front for displaying digital photos, positioned in a housing (9-13), while at the back it comprises at least one electrical socket (8) to connect the power supply and the power supply (2) has a first plug-in (5) used to connect it to a power source and a second plug-in (6) electrically connected thereto for placing in the electrical socket (8) of the device (1) for displaying digital photos, characterized in that the electrical socket (8) of the device (1) is located at the back of the housing (9), near the edge (10) of the housing, and the second power supply (2) plug-in (6) is shaped and dimensioned such that when it is placed in the electrical socket (8) of the device it is a stand holding the device (1) in a substantially vertical position.

## Description

The invention relates to a set comprising a device for displaying digital photos and a power supply. More particularly, the invention relates to a set comprising a device for displaying digital photos and a power supply to supply electricity to the device, wherein the device with a substantially rectangular shape has a display in front for displaying digital photos, positioned in a housing, while at the back it comprises at least one electrical socket to connect the power supply and the power supply has a first plug-in used to connect it to a power source and a second plug-in electrically connected thereto for placing in the electrical socket of a device.

Devices for displaying digital photos are known. These are electronic devices equipped with a display - typically a liquid crystal with a diagonal from a few to several inches
- arranged in the housing. The devices equipped with a small display are referred to colloquially as "frames for displaying photos." The device is controlled by a suitably programmed microprocessor. The device has a stand, which allows for setting it in a position close to the vertical one, e.g. on the nightstand. This is the normal operating position of the device - in this position the photos displayed on the display are clearly visible to the user. The stand can be a separate element that can be integrated with the housing or may be a suitably shaped part of the housing. The devices typically have a substantially rectangular shape, with sides of different lengths. Therefore - according to the orientation of the displayed photos the user placing the device in said substantially vertical position as the position of the operation may give the device a portrait-type orientation (English *portrait*) - when the shorter edge of the device is its lower edge or landscape-type orientation (English *landscape)*
- when the longer edge of the device is its lower edge. Built-in batteries or - more often - an external power supply, with which the device is connected to the power socket are used to power the device. In turn, the built-in batteries also require regular charging, which is typically done using an external power supply. The source of the displayed photos may be internal memory, built-in device, or various types of storage media, e.g. a memory card or USB memory stick that can be connected to the device via appropriate ports that the device has. One or more buttons (or other controls - sliders, knobs) are used to control the device. Both the socket for the power connection and the external memory port (USB, cards), and the said control buttons are arranged in the housing of the device. There are devices equipped with wireless communication modules (e.g. WiFi), so that the photos can be transferred to the device wirelessly.

The term "digital photos" as used herein is widely understood - as any visual information fit for display. Those can be any image file formats supported by the device, in particular popular formats jpg, gif, bmp. The displayed photos can contain inscriptions. For example, along with an image, a message from the photo's author may be displayed and/or name of the author.

An exemplary construction of the device was disclosed in the patent application No. US 2009/3219245 A1. The device has a display located at the front, whereas at the back, i.e. on the back wall of the device's housing it has controls (buttons) dedicated and available for the user, power socket, USB and memory card ports and a stand. The said buttons and sockets are not hidden, in particular in another part of the device's housing. The said stand is a separate part, which only function is to stabilize the vertical position of the device. The stand is not a part of the device's power supply. In turn, the power supply plug-in inserted in the designed socket does not support the device in any way.

Another device is disclosed in a Korean document KR 10-2011-0095490. In this case, the controls (buttons) are located at the front of the device, around the display.

US industrial design No. D545,782 S discloses a device, wherein the housing has an integral bent part, which is a stand that allows to set the device in a substantially vertical position. The controls are located at the front of the housing, below the display, at the bottom, i.e., near the place where the device's housing is bent to form a stand. In turn, the ports (USB, memory card, power supply) are disposed on the back of the device's housing and are not covered with any other part of the housing.

Tablets are also known, which can serve as devices for displaying digital photos, if only the right program is started. Tablets can communicate wirelessly (e.g. using WiFi, GSM, UMTS, LTE, etc.) and this way download photos to be displayed. Typically, tablets are not designed to set in the vertical position. To do this - one needs to use the docking station or a special stand. Such stand is not an AC charger plug-in for the tablet. Tablets usually have one socket for connecting to an external power source. Tablets do not have a sectional housing, whose parts would be hinged and overlap so as to hide the controls external memory ports, located in the second part of the housing, under one part of the housing.

The need of energizing the devise or systematic device battery charging entails using the AC adapter. Regardless of the need to set the device in a substantially vertical position (that is, in the typical position of operation - so that the displayed photos were visible) requires the use of additional elements: stands, tripods, docking stations, etc. This complicates the overall structure of the device, which in itself is simple and makes the device more difficult to use. Also, constant availability and the multiplicity of controls, buttons, sliders and ports- even if they are located at the back of the device - can cause the users (e.g. the elderly people) to have the wrong impression that they are dealing with the complex device, difficult to use, etc.

It is therefore desirable to simplify the construction of the device, in particular by reducing the number of elements (parts, components) required for normal use of the device.

Furthermore, it is desirable to place the controls, buttons, sliders and ports so that they are readily available at the time when they are needed by the user and could be easily hidden/masked when they are not needed.

Therefore, the object of the present invention is to provide a device for displaying digital photos fulfilling the above mentioned requirements.

According to the invention, a set comprising a device for displaying digital photos and the power supply for supplying electricity to the device, wherein the device with a substantially rectangular shape has a display in front for displaying digital photos, positioned in a housing, while at the back it comprises at least one electrical socket to connect the power supply and the power supply has a first plug-in used to connect it to a power source and a second plug-in electrically connected thereto for placing in the electrical socket of a device for displaying digital photos, characterized in that the electrical socket of the device is located at the back of the housing, near the edge of the housing, and the second power supply plug-in is shaped and dimensioned such that when it is placed in the electrical outlet of the device it is a stand holding the device in a substantially vertical position.

Preferably, the device has two electrical sockets, this is the first electrical socket and second electrical socket, located at the back of the housing and the first electrical socket is located near the first edge of the housing in such a way that the second power supply plug-in when placed in the first electrical socket of the device is a stand holding the device in a substantially vertical position, wherein the first edge of the housing becomes a lower edge of the device and the second electrical socket is positioned near the second edge of the housing substantially perpendicular to the first edge of the housing, in such a way that the second power supply plug-in when placed in the second electrical socket of the device is a stand holding the device in a substantially vertical position, wherein the second edge of the housing becomes a lower edge of the device.

Most preferably, the device has two identical electrical sockets.

Preferably, the first electrical socket is located near the center of the first edge of the housing, and a second electrical socket is located near the center of the second edge of the housing.

In a particularly preferred embodiment of the invention, the housing of the device comprises a front part located around a display and having side edges, that is, walls substantially perpendicular to the plane of the display and a back part, closing the device from the back, and also having side edges i.e. walls which are substantially perpendicular to the plane of the display, wherein one of the side edges of the back part of the housing has ports and/or controls, and a back part of the housing is hinged inside the front part of the housing and can move relative thereto in a reversible manner between a first part in which the said ports and/or controls are hidden under one of the side edges of the front part of the housing and a second position in which said ports and/or controls are exposed and accessible to the user.

Preferably, the hinged connection of the front and back part of the housing of the device comprises hinges arranged in the middle of two opposite sides of the device, preferably the shorter sides of the device.

Preferably, the device has a locking latch to allow blocking the back part of the housing relative to the front part of the housing in the said first position and the said second position.

Preferably, the device has a touch screen.

In one possible embodiment the device has more than one display, in particular, multiple displays, respectively positioned next to each other or respectively juxtaposed, forming a common area, on which the image is presented ("display").

Preferably, the device has at least one module for communicating in a wireless technology, in particular to communicate with other devices.

Preferably, the first power supply plug-in is a mains plug-in, used to connect to a common electrical network.

Preferably, the power supply has a transformer.

### A preferred embodiment of the invention

The invention will now be further illustrated in the preferred embodiment, with reference to the accompanying drawings of the invention's prototype, in which:
- Fig. 1: shows a general view of a set which comprises a device for displaying digital photos in a substantially vertical position, in the portrait- type orientation and the power supply to supply electricity to the device;
- Fig. 2: shows a back part of the device's housing for displaying digital photos;
- Fig. 3: shows a power supply of a device for displaying digital photos;
- Fig. 4: shows a side view of the device for displaying digital photos:
a) view more from the front;
b) view more from the back;
- Fig. 5: shows photos of a device for displaying digital photos which show in close-up one of the power supply plug-ins in the electrical socket of the said device:
a) view more from the front;
b) view more from the back;
- Fig. 6: shows a general view of a device for displaying digital photos in a substantially vertical position, in the landscape- type orientation together with a power supply;
- Fig. 7: shows in close-up one of the power supply plug-ins placed in the electrical socket of a device for displaying digital photos.
- Fig. 8: shows in close-up a plug-in used for placing in the electrical socket of a device for displaying digital photos.

The following indications were used in the drawings: 1 - device, 2 - power supply, 3 - ports (USB, memory card) and controls, 4 - display, 5 - power supply plug-in for connecting to a power source (first power supply plug-in), 6 - power supply plug-in for placing in the electrical socket of the device (second power supply plug-in); 7 - second electrical socket, 8-first electrical socket, 9 - back part of the housing, 10 - first edge of the housing, 11 - front part of the housing, 12 - second edge of the housing, 13 - side edge of the front side of the housing (substantially perpendicular to the plane of the display).

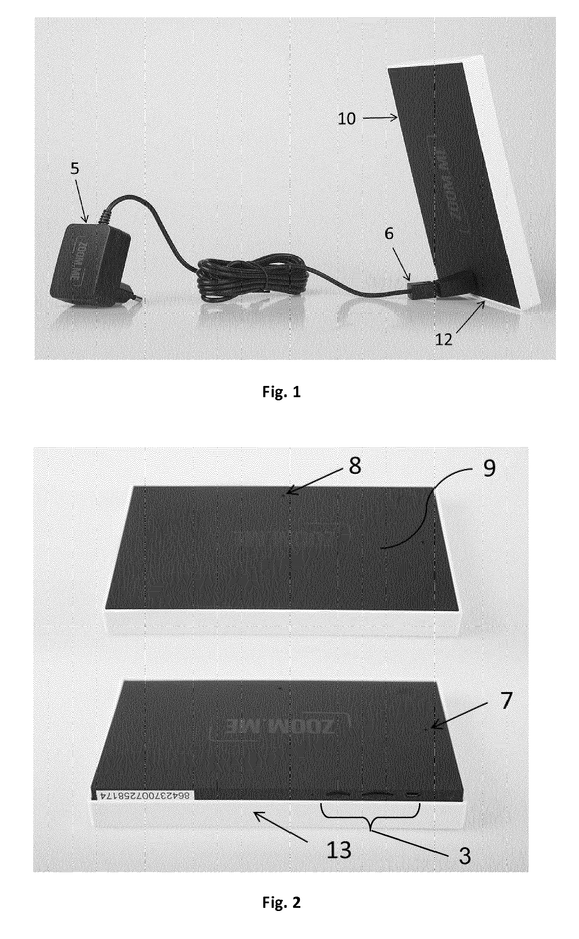

In the present preferred embodiment, the device 1 for displaying digital photos, being a part of the set according to the invention has a substantially rectangular shape, with edges of different lengths. The device 1 has a display 4 arranged in the housing (9-13) at the front. The housing of the device 1 comprises a front part 11 located around the display 4 and having side edges 13, that is the walls substantially perpendicular to the plane of the display 4 and the back part 9 closing the device 1 from the back and also having side edges, that is the walls substantially perpendicular to the plane of the display 4. In the accompanying photos the front part of the housing 11 is white, and the back part 9 - is black (Fig. 1, 4, 6).

At the back part 9 of the device's 1 housing there are two identical electrical sockets 7, 8 for connecting the power supply 2. First of these sockets 8 is located near the edge 10 of the housing, in the middle of one of the longer sides of the device 1. Second of these sockets 7 is located near the edge 12 of the housing, in the middle of one of the shorter sides of the device 1. The shorter and the longer side of the device 1 are perpendicular to each other (Fig. 1, 2, 4, 6).

Moreover, one of the side edges of the back part 9 of the housing has 3 ports: mini USB and two memory card ports of various type. In general, they can be any ports and/or controls 3. The back part 9 of the housing is hinged inside the front part 11 of the housing and can move relative thereto in a reversible manner between a first position in which the said ports and/or controls 3 are hidden under one of the side edges 13 of the front part 11 of the housing, and a second position in which the said ports and/or controls 3 are exposed and accessible to the user (Fig. 2).

The hinged connection of the front 11 and the back part 9 of the housing of the device 1 is accomplished by means of hinges arranged in the middle of two opposite shorter sides of the device 1. Alternatively, longer sides can be chosen. The device 1 also has a locking latch to allow blocking the back part 9 of the housing relative to the front part 11 of the housing in the said first position and the said second position, according to the user's needs.

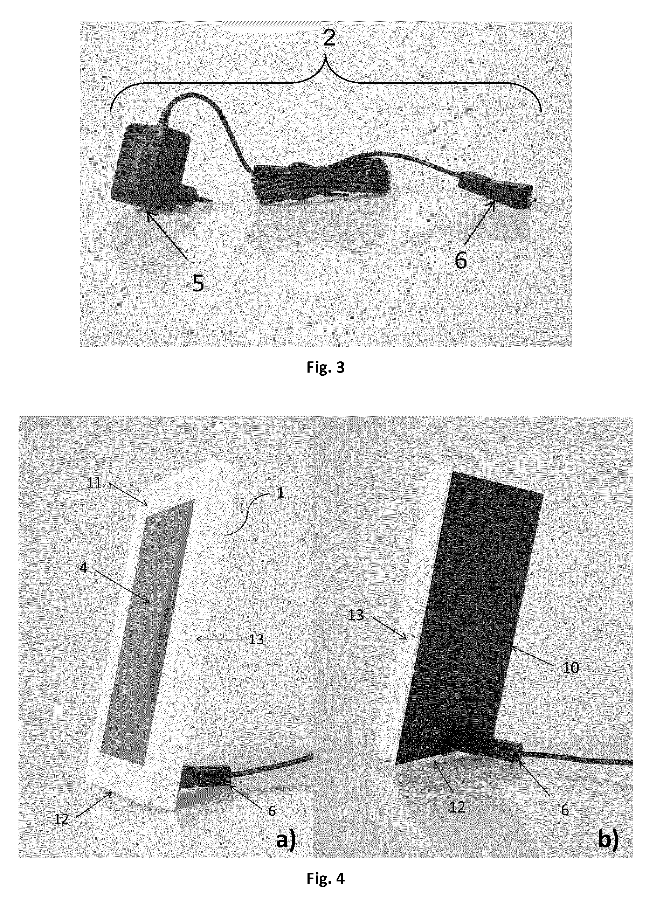

A part of the set according to the invention is also a power supply 2 for energizing the device, having a first plug-in 5 used to connect it to a power source (e.g. home electrical network) and a second plug-in 6 electrically connected thereto with a wire for placing in the electrical socket 7, 8 of a device 1 for displaying digital photos. In the present embodiment, the first power supply 2 plug-in 5 is a standard plug-in used to connect to a common electrical network, and the housing of the first power supply 2 plug-in 5 has a transformer - but it is not relevant from the standpoint of the present invention (Fig. 3).

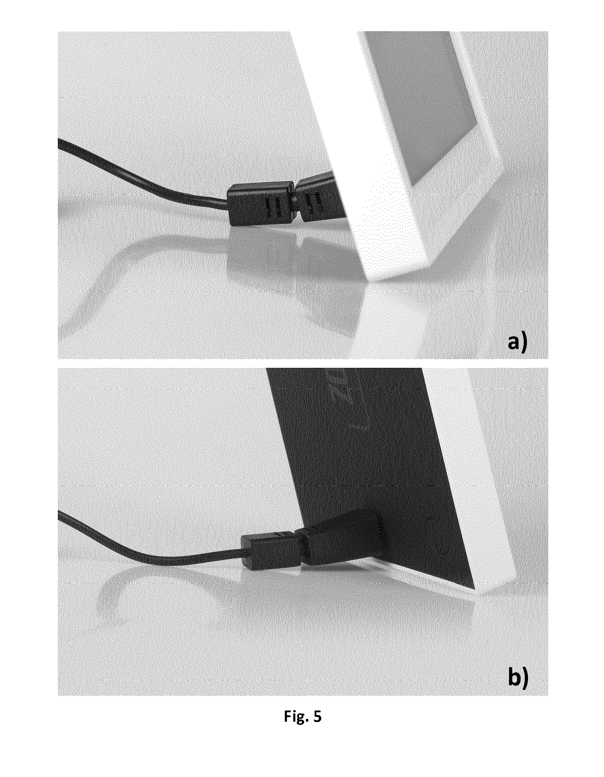

However, from the standpoint of the present invention it is important to intentionally select the shape and dimensions of the second power supply 2 plug-in 6 and placing electrical sockets 7, 8 for connecting the power supply 2 in the back part 9 of the housing of the device 1. Namely, each of the two electrical sockets 7, 8 is arranged in the back part 9 of the housing of the device 1, near its edge, and the second power supply 2 plug-in 6 has a shape and dimensions such that when it is placed in any of said electrical sockets 7, 8 the device 1 is a stand holding the device 1 in a substantially vertical position (that is, in the normal operating position of the device 1). Thus in the present invention, the functions of a stand and bringing power to the device are integrated (Fig. 1, 4, 5, 6, 7).

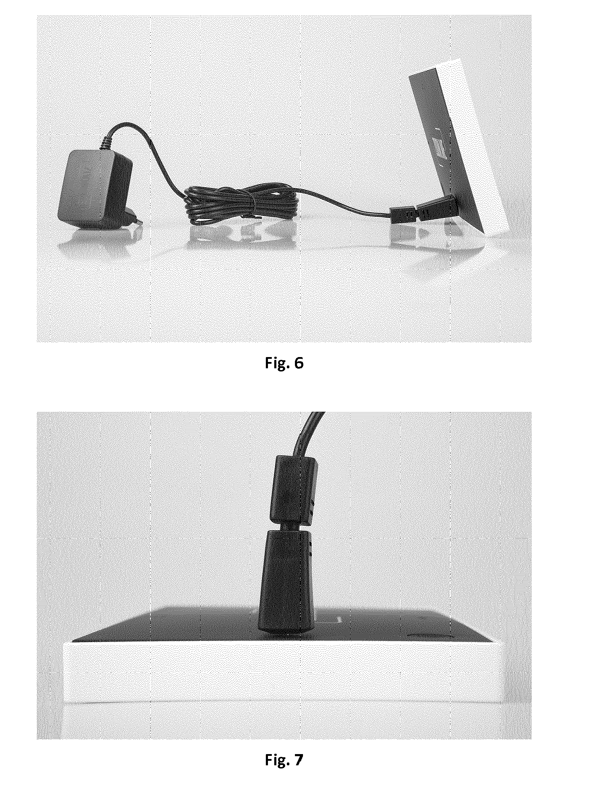

In the present embodiment, connecting the second power supply 2 plug-in 6 to the first socket 8 provided on the longer edge 10 of the device, allows to maintain the device 1 in a substantially vertical position, wherein the said first edge 10 of the housing becomes a lower edge of the device 1, and thus the device 1 gains the landscape-type orientation - Fig. 6. Similarly, connecting the second power supply 2 plug-in 6 to the second socket 7 provided on the shorter edge 12 of the device, allows to maintain the device 1 in a substantially vertical position, wherein the said second edge 12 of the housing becomes a lower edge of the device 1, and thus the device 1 gains the portrait-type orientation - Fig. 1, 4. It is obvious that integrating the functions of a stand and bringing power to the device is related to the location of the socket 7, 8 and shaping of the second power supply 2 plug-in 6 and can be implemented also in the device of one socket, three sockets and the like. On the other hand, performing two electrical sockets 7, 8 of the device 1 on the longer and the shorter edge of the device 1 allows for convenient change of the device's 1 orientation. For the realisation of the present invention it is not necessary for the device's electrical socket or sockets to be in the middle of the edge of the housing. The socket may be located elsewhere in the edge, and in particular even at its rim. The socket located in the middle of the edge provides the most stable support of the device. Finally, for the realisation of the present invention, the device doesn't need to have a rectangular shape - a device with a different shape - triangular, polygonal, oval, etc., can be supported in this way too.

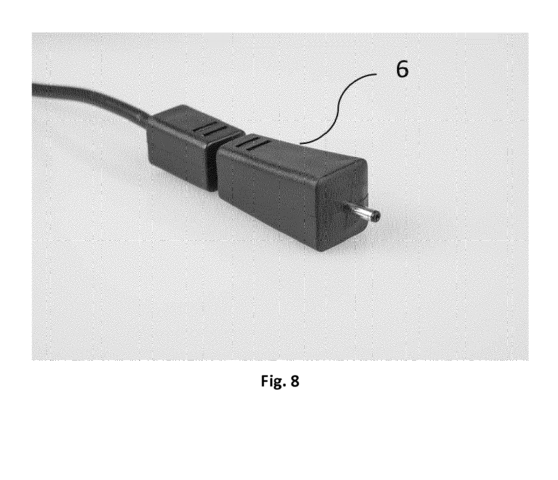

As regards the shape of the second power supply 2 plug-in 6 - an exemplary shape of such a plug-in 6 is clearly visible in Fig. 3, 5, 7 and 8. The plug-in 6 has a substantially square cross-section, with a cross-sectional area increasing in the direction of the electrical contact extending from the socket 6. The shape may, however, be different, as long as the length of the plug-in 6 provides a stable support of the device 1. From this point of view, a preferred shape is flattened, wherein the contact surface of the object, on which device 1 stands (table, cabinet) is as large as possible. Plug-in 6 may include additional ribbing, grooves, etc. to facilitate removing it from the socket of the device.

The display of the device may be a touch screen display. In this case, the control of the device can be carried out using a dedicated interface (application) shown on the display.

The remainder the device 1 uses well-known electronic components, particularly memory and a microprocessor programmed accordingly. Moreover, the device 1 can be equipped with wireless communication modules (e.g. WiFi GSM, UMTS, LTE), so that the photos can be transferred to the device wirelessly.

As mentioned initially, devices equipped with a small screen - typically with a diagonal of a few to several inches - are commonly called "frames to display photos." However, the present invention is not limited to devices with a single small display. The device according to the invention may essentially have any display size. May have two or more displays. In the end - an area on which the image ("display") is presented may comprise a plurality of displays, respectively arranged side by side.

The present invention allows to significantly simplify the construction of the device, in particular by reducing the number of elements (parts, components) required for normal use of the device. Furthermore, it provides such an arrangement of the controls, buttons, sliders and ports to be readily available at the time when they are needed by the user and could be easily hidden/masked when they are not needed.

## Claims

1. A set comprising a device (1) for displaying digital photos and a power supply (2) for supplying electricity to the device, wherein
the device (1) with a substantially rectangular shape has a display (4) in front for displaying digital photos, positioned in a housing (9-13), while at the back it comprises at least one electrical socket (8) to connect the power supply,
and the power supply (2) has a first plug-in (5) used to connect to a power source and a second plug-in (6) electrically connected thereto for placing in the electrical socket (8) of the device (1) for displaying digital photos,
**characterized in that** the electrical socket (8) of the device (1) is located at the back of the housing (9), near the edge (10) of the housing, and the second power supply (2) plug-in (6) is shaped and dimensioned such that when it is placed in the electrical socket (8) of the device it is a stand holding the device (1) in a substantially vertical position.

2. A set according to claim 1, **characterized in that** the device has two electrical sockets (7, 8), this is the first electrical socket (8) and second electrical socket (7), located at the back of the housing (9) and
the first electrical socket (8) is located near the first edge (10) of the housing in such a way that the second power supply (2) plug-in (6) when placed in the first electrical socket (8) of the device is a stand holding the device in a substantially vertical position, wherein the first edge (10) of the housing becomes a lower edge of the device (1) and
the second electrical socket (7) is positioned near the second edge (12) of the housing substantially perpendicular to the first edge (10) of the housing, in such a way that the second power supply (2) plug-in (6) when placed in the second electrical socket (7) of the device is a stand holding the device (1) in a substantially vertical position, wherein the second edge (12) of the housing becomes a lower edge of the device (1).

3. A set according to claim 2, **characterized in that** the device (1) has two identical electrical sockets (7, 8).

4. A set according to claim 2 or 3, **characterized in that** first electrical socket (8) located near the center of the first edge (10) of the housing, and a second electrical socket (7) located near the center of the second edge (12) of the housing.

5. A set according to any of the preceding claims, **characterized in that** the housing of the device (1) comprises
a front part (11) located around a display (4) and having side edges (13), that is, walls substantially perpendicular to the plane of the display (4) and
a back part (9), closing the device (1) from the back, and also having side edges i.e. walls which are substantially perpendicular to the plane of the display (4), wherein one of the side edges of the back part (9) of the housing has ports and/or controls (3), and
a back part (9) of the housing is hinged inside the front part (11) of the housing and can move relative thereto in a reversible manner between a first position in which the said ports and/or controls (3) are hidden under one of the side edges (13) of the front part (11) of the housing and a second position in which said ports and/or controls (3) are exposed and accessible to the user.

6. A set according to claim 5, **characterized in that** the hinged connection of the front part (11) and back part (9) of the housing of the device (1) comprises hinges arranged in the middle of two opposite sides of the device (1), preferably the shorter sides of the device (1).

7. A set according to claim 5 or 6, **characterized in that** the device (1) has a locking latch to allow blocking the back part (9) of the housing relative to the front part (11) of the housing in said first position and said second position.

8. A set according to any of the preceding claims, **characterized in that** the housing of the device has a touch screen display.

9. A set according to any of the preceding claims, **characterized in that** the device has more than one display, in particular, multiple displays, respectively positioned next to each other or respectively juxtaposed, forming a common area, on which the image is presented ("display").

10. A set according to any of the preceding claims, **characterized in that** the device has at least one module for communication in a wireless technology, in particular to communicate with other devices.

11. A set according to any of the preceding claims, in which a first power supply (2) plug-in (5) is a mains plug-in, used to connect to a common electrical network.

12. A set according to any of the preceding claims, in which the power supply (2) has a transformer
